(19) Europäisches Patentamt
European Patent Office
Office européen des brevets

(11) **EP 4 668 940 A1**

(12) **EUROPEAN PATENT APPLICATION**
published in accordance with Art. 153(4) EPC

(43) Date of publication:
**24.12.2025 Bulletin 2025/52**

(21) Application number: 23922527.9

(22) Date of filing: **26.12.2023**

(51) International Patent Classification (IPC):
**H04W 72/044** (2023.01)

(52) Cooperative Patent Classification (CPC):
**H04W 72/044; H04W 72/0446**

(86) International application number:
**PCT/CN2023/141887**

(87) International publication number:
**WO 2024/169412 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2023   CN 202310146327**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Maiwald GmbH**
**Elisenhof**
**Elisenstraße 3**
**80335 München (DE)**

(54) **BEAM INFORMATION DETERMINATION METHOD AND APPARATUS, BEAM INFORMATION INDICATION METHOD AND APPARATUS, FORWARDING NODE AND BASE STATION**

(57)    Provided are a method and an apparatus for determining beam information, a method and an apparatus for indicating beam information, a forwarding node and a base station. The method includes: receiving, by a forwarding node, one or more first parameters of beam indication information configured by a base station; receiving, by the forwarding node, a first dynamic control information transmitted by the base station; and determining, by the forwarding node, one or more time domain locations indicated by the first dynamic control information and beam information corresponding to the one or more time domain locations according to the one or more first parameters and the first dynamic control information.

receiving, by a forwarding node, one or more first parameters of beam indication information configured by a base station — 201

receiving, by the forwarding node, a first dynamic control information transmitted by the base station — 202

determining, by the forwarding node, one or more time-domain positions indicated by the first dynamic control information and beam information corresponding to the one or more time-domain positions according to the one or more first parameters and the first dynamic control information — 203

FIG. 2

**Description**

**CROSS-REFERENCE TO RELATED APPLICATION**

The present disclosure claims a priority to Chinese Patent Application No. 202310146327.9 entitled "beam information determination method and apparatus, beam information indication method and apparatus, forwarding node and base station" filed on February 14, 2023, disclosure of which is hereby incorporated by reference in its entirety.

**TECHNICAL FIELD**

The present disclosure relates to the field of communication technologies, in particular to a method and an apparatus for determining beam information, a method and an apparatus for indicating beam information, a forwarding node and a base station.

**BACKGROUND**

In a network controlled repeater (NCR), beamforming for a forwarding link is supported to enhance reception performance on a terminal side. The smart behavior of the repeater refers to that the repeater can dynamically adjust a transmission or reception process in real time according to actual needs of serving a terminal. Generally, to support the real-time adjustment process of the smart repeater, the base station needs to transmit auxiliary information or control information to the repeater. The NCR includes two functional modes: NCR terminal (function) and NCR forwarding (function). The NCR terminal function is used to interchange control signaling with a base station, and the control signaling is used to control a forwarding parameter of the NCR, such as controlling a beam direction of an access link. The NCR forwarding function is used to forward a signal from the base station to the terminal and forward a signal from the terminal to the base station. The relevant forwarding parameters are indicated by the NCR terminal.

A beam between the base station and the NCR may be considered relatively stable and unchanged. On the access link between the NCR and the terminal, multiple beams may provide coverage. As the terminal moves or the environment changes, a beam direction from the NCR to the terminal needs to be adjusted. The beam indication is completed by the base station, i.e., the base station instructs, via control signaling, the NCR to use a specific beam for signal forwarding. In order to adapt to different terminals and terminal mobility, how to dynamically indicate beam information of an access link for forwarding is an issue that needs to be addressed.

**SUMMARY**

The objective of embodiments of the present disclosure is to provide a method and an apparatus for determining beam information, a method and an apparatus for indicating beam information, a forwarding node and a base station, so as to solve the problem in related technologies of how a base station indicates beam information of an access link of a forwarding node.

To address this issue, an embodiment of the present disclosure provides a method for determining beam information, which includes the following steps:

receiving, by a forwarding node, one or more first parameters of beam indication information configured by a base station;
receiving, by the forwarding node, a first dynamic control information transmitted by the base station; and
determining, by the forwarding node, one or more time domain locations indicated by the first dynamic control information and beam information corresponding to the one or more time domain locations according to the one or more first parameters and the first dynamic control information.

Optionally, the one or more first parameters include one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, including one or more of a time domain offset, a time domain start location, or a time domain length.

Optionally, the first dynamic control information includes: a first quantity of beam indexes, the first quantity being equal to the first numerical value; and one or more time indexes.

Optionally, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

Optionally, the determining the one or more time domain locations indicated by the first dynamic control information and the beam information corresponding to the one or more time domain locations according to the one or more first parameters and the first dynamic control information includes:

determining the first quantity of beam indexes and the one or more time indexes according to the one or more first parameters and the first dynamic control information;

determining the one or more time domain locations indicated by the first dynamic control information according to time domain information corresponding to the one or more time indexes;

determining a correspondence between the first quantity of beam indexes and one or more time domain information corresponding to the one or more time indexes according to a preset rule, where the beam indexes correspond to the time domain information in a one-to-one manner; and

determining the beam information corresponding to the one or more time domain locations according to the correspondence.

Optionally, the method further includes: ignoring, by the forwarding node, indication of the first dynamic control information, in a case that a beam index included in the first dynamic control information is a third numerical value, and/or a time index included in the first dynamic control information is a fourth numerical value.

Optionally, the third numerical value is greater than the second numerical value, or the third numerical value is a preset value; the fourth numerical value is a preset value, or the fourth numerical value is greater than a maximum time index configured by the base station.

Optionally, the determining the correspondence between the first quantity of beam indexes and one or more time domain information corresponding to the one or more time indexes according to the preset rule includes:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

Optionally, the method further includes: determining that a reference time domain location of the time domain offset of the time domain information corresponding to each time index is a first reference time domain location; or determining that a reference time domain location of the time domain offset of the time domain information corresponding to the time index is a time domain location indicated by a time domain offset of a previous time domain information.

Optionally, the first reference time domain location includes: a time domain location where the first dynamic control information is received; or a time domain location where a hybrid automatic repeat request acknowledgment (HARQ-ACK) is fed back.

Optionally, in a case that the time domain start location and the time domain length of the time domain information are jointly encoded, the method further includes: determining the time domain start location and the time domain length included in the time domain information according to a start and length indication value (SLIV) included in the time domain information and a first formula, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

An embodiment of the present disclosure further provides a method for indicating beam information, including:

configuring, by a base station, one or more first parameters of beam indication information for a forwarding node; and
transmitting, by the base station, a first dynamic control information to the forwarding node, where the one or more first parameters and the first dynamic control information are used for determining one or more time domain locations indicated by the first dynamic control information and beam information corresponding to the one or more time domain locations.

Optionally, the one or more first parameters include one or more of the following:

a first numerical value, used for determining a maximum quantity of beams that one first dynamic control information is capable of indicating;

a second numerical value, used for determining a maximum beam index or a quantity of bits used for the maximum beam index that one first dynamic control information is capable of indicating; or

time domain information, including one or more of a time domain offset, a time domain start location, or a time domain length.

Optionally, the first dynamic control information includes: a first quantity of beam indexes, the first quantity being equal to the first numerical value; and one or more time indexes.

Optionally, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

Optionally, the method further includes:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

Optionally, the method further includes:

determining that a reference time domain location of the time domain offset of the time domain information corresponding to each time index is a first reference time domain location; or

determining that a reference time domain location of the time domain offset of the time domain information corresponding to the time index is a time domain location indicated by a time domain offset of a previous time domain information.

Optionally, the first reference time domain location includes: a time domain location where the first dynamic control information is received; or, a time domain location where an HARQ-ACK is fed back.

Optionally, in a case that the time domain start location and the time domain length of the time domain information are jointly encoded, the method further includes: determining a start and length indication value (SLIV) included in the time domain information according to a first formula, the time domain start location and the time domain length, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

An embodiment of the present disclosure further provides forwarding node, including: a memory, a transceiver and a processor, where the memory is configured to store a computer program; the transceiver is configured to receive and transmit data under the control of the processor; and the processor is configured to read the computer program from the memory to perform the following steps:

receiving one or more first parameters of beam indication information configured by a base station;

receiving a first dynamic control information transmitted by the base station; and

determining one or more time domain locations indicated by the first dynamic control information and beam information corresponding to the one or more time domain locations according to the one or more first parameters and the first dynamic control information.

Optionally, the one or more first parameters include one or more of the following:

a first numerical value, used for determining a maximum quantity of beams that one first dynamic control information is capable of indicating;

a second numerical value, used for determining a maximum beam index or a quantity of bits used for the maximum beam index that one first dynamic control information is capable of indicating; or

time domain information, including one or more of a time domain offset, a time domain start location, or a time domain length.

Optionally, the first dynamic control information includes: a first quantity of beam indexes, the first quantity being equal to the first numerical value; and one or more time indexes.

Optionally, the time domain information is configured in a time domain list, where the time domain list includes a plurality of time indexes and one piece of time domain information corresponding to each time index in the plurality of time indexes; or

the time domain information is configured in a time domain combination list, where the time domain combination list includes a plurality of time indexes and multiple pieces of time domain information corresponding to each time index in the plurality of time indexes.

Optionally, the processor is further configured to read the computer program from the memory to perform the following steps:

determining the first quantity of beam indexes and the one or more time indexes according to the one or more first parameters and the first dynamic control information;

determining the one or more time domain locations indicated by the first dynamic control information according to time domain information corresponding to the one or more time indexes;

determining a correspondence between the first quantity of beam indexes and one or more time domain information corresponding to the one or more time indexes according to a preset rule, where the beam indexes correspond to the time domain information in a one-to-one manner; and

determining the beam information corresponding to the one or more time domain locations according to the correspondence.

Optionally, the processor is further configured to read the computer program from the memory to perform the following steps: ignoring, by the forwarding node, indication of the first dynamic control information, in a case that a beam index included in the first dynamic control information is a third numerical value, and/or a time index included in the first dynamic control information is a fourth numerical value.

Optionally, the third numerical value is greater than the second numerical value, or the third numerical value is a preset value; the fourth numerical value is a preset value, or the fourth numerical value is greater than a maximum time index configured by the base station.

Optionally, the processor is further configured to read the computer program from the memory to perform the following steps:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

Optionally, the processor is further configured to read the computer program from the memory to perform the following steps:

determining that a reference time domain location of the time domain offset of the time domain information corresponding to each time index is a first reference time domain location; or

determining that a reference time domain location of the time domain offset of the time domain information corresponding to the time index is a time domain location indicated by a time domain offset of a previous time domain information.

Optionally, the first reference time domain location includes: a time domain location where the first dynamic control information is received; or a time domain location where a hybrid automatic repeat request acknowledgment (HARQ-ACK) is fed back.

Optionally, in a case that the time domain start location and the time domain length of the time domain information are jointly encoded, the processor is further configured to read the computer program from the memory to perform the following steps: determining the time domain start location and the time domain length included in the time domain information according to a start and length indication value (SLIV) included in the time domain information and a first formula, where the first formula is: $SLIV = W \cdot (L - 1) + S$, or $SLIV = W \cdot (W - L + 1) + (W - 1 - S)$, where $0 < L \le W - S$, L denotes the time domain length; S denotes the time domain start location, and S is an integer greater than or equal to 0, and less than or equal to 13; $W = N * 14$ or $W = N * 12$, and N is an integer greater than or equal to 1.

An embodiment of the present disclosure further provides an apparatus for determining beam information, including:

a first receiving unit, configured to receive one or more first parameters of beam indication information configured by a base station;
a second receiving unit, configured to receive a first dynamic control information transmitted by the base station; and
a determining unit, configured to determine one or more time domain locations indicated by the first dynamic control information and beam information corresponding to the one or more time domain locations according to the one or more first parameters and the first dynamic control information.

An embodiment of the present disclosure further provides a base station, including: a memory, a transceiver and a processor, where the memory is configured to store a computer program; the transceiver is configured to receive and transmit data under the control of the processor; and the processor is configured to read the computer program from the memory to perform the following steps:

configuring one or more first parameters of beam indication information for a forwarding node; and
transmitting a first dynamic control information to the forwarding node, where the one or more first parameters and the first dynamic control information are used for determining one or more time domain locations indicated by the first dynamic control information and beam information corresponding to the one or more time domain locations.

Optionally, the one or more first parameters include one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, including one or more of a time domain offset, a time domain start location, or a time domain length.

Optionally, the first dynamic control information includes: a first quantity of beam indexes, the first quantity being equal to the first numerical value; and one or more time indexes.

Optionally, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

Optionally, the processor is further configured to read the computer program from the memory to perform the following steps:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

Optionally, the processor is further configured to read the computer program from the memory to perform the following steps:

determining that a reference time domain location of the time domain offset of the time domain information corresponding to each time index is a first reference time domain location; or

determining that a reference time domain location of the time domain offset of the time domain information corresponding to the time index is a time domain location indicated by a time domain offset of a previous time domain information.

Optionally, the first reference time domain location includes: a time domain location where the first dynamic control information is received; or, a time domain location where an HARQ-ACK is fed back.

Optionally, in a case that the time domain start location and the time domain length of the time domain information are jointly encoded, the processor is further configured to read the computer program from the memory to perform the following steps: determining a start and length indication value (SLIV) included in the time domain information according to a first formula, the time domain start location and the time domain length, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

An embodiment of the present disclosure further provides an apparatus for indicating beam information, including:

a configuring unit, configured to configure one or more first parameters of beam indication information for a forwarding node; and

a transmitting unit, configured to transmit a first dynamic control information to the forwarding node, where the one or more first parameters and the first dynamic control information are used for determining one or more time domain locations indicated by the first dynamic control information and beam information corresponding to the one or more time domain locations.

An embodiment of the present disclosure further provides a processor-readable storage medium, storing a computer program, the computer program is configured to cause the processor to perform the method described above.

At least the following beneficial effects are achieved in the technical solutions of the present disclosure. In the method and the apparatus for determining beam information, the method and the apparatus for indicating beam information, the forwarding node, and the base station provided by the embodiments of the present disclosure, the base station configures one or more first parameters of beam indication information for the forwarding node and indicates one or more time domain locations of an access link of the forwarding node and beam information corresponding to the one or more time domain locations through a first dynamic control information. This enables the base station to dynamically control the one or more time domain locations and beam information of the access link of the forwarding node, thereby improving reception performance at the side of the terminal.

## BRIEF DESCRIPTION OF THE DRAWINGS

FIG. 1 shows a block diagram of a wireless communication system to which an embodiment of the present disclosure may be applied;

FIG. 2 shows a flowchart of steps of a method for determining beam information according to an embodiment of the present disclosure;

FIG. 3 shows a flowchart of steps of a method for indicating beam information indication according to an embodiment of the present disclosure;

FIG. 4 shows a schematic diagram of time domain information for Example 1 according to an embodiment of the present disclosure;

FIG. 5 shows a schematic diagram of time domain information for Example 2 according to an embodiment of the present disclosure;

FIG. 6 shows a schematic structural diagram of the forwarding node according to an embodiment of the present disclosure;

FIG. 7 shows a schematic structural diagram of an apparatus for determining beam information according to an embodiment of the present disclosure;

FIG. 8 shows a schematic structural diagram of a base station according to an embodiment of the present disclosure; and

FIG. 9 shows a schematic structural diagram of an apparatus for indicating beam information according to an embodiment of the present disclosure.

## DETAILED DESCRIPTION

In order to make a to-be-solved technical problem, a technical solution and advantages of the present disclosure clearer, a detailed description will be given below in conjunction with the accompanying drawings and specific embodiments.

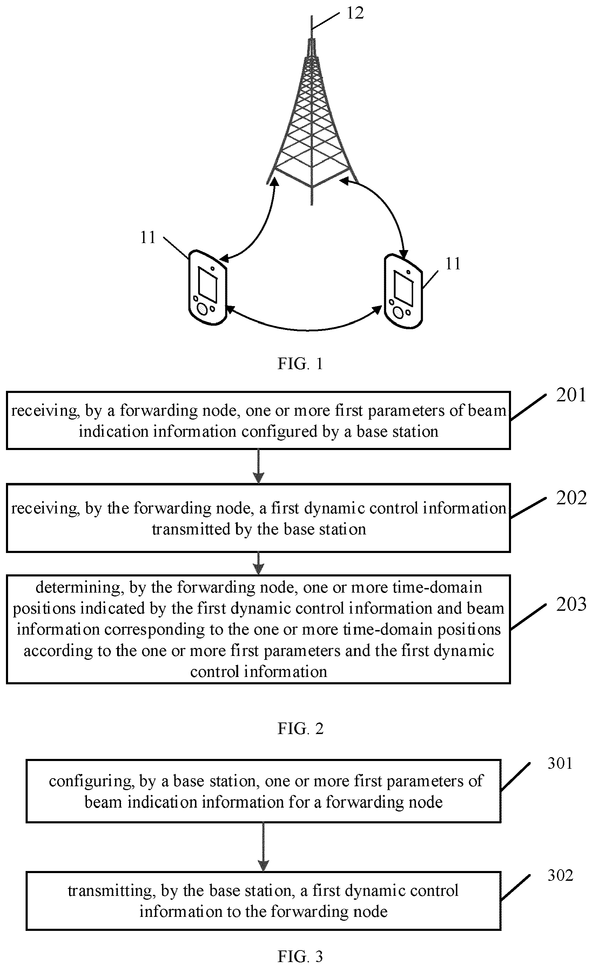

FIG. 1 shows a block diagram of a wireless communication system applicable to an embodiment of the present disclosure. The wireless communication system includes a terminal device 11 and a network side device 12. The terminal device 11 may also be referred to as a terminal or a user equipment (UE). It should be noted that the specific type of the terminal 11 is not limited in the embodiment of the present disclosure. The network side device 12 may be a base station or a core network. It should be noted that in the embodiments of the present disclosure, only a base station in the NR system is taken as an example, but the specific type of the base station is not limited.

The term "and/or" in the embodiments of the present disclosure describes an association relationship of associated objects, indicating that there may be three types of relationships. For example, A and/or B, which may represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

The technical solution according to embodiments of the present disclosure may be applied to various systems, particularly to a 5th Generation Mobile Communication Technology (5G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G new radio (NR) system. Each of the various systems includes a terminal and a network device. The systems may further include a core network portion, such as an evolved packet system (EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal may communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WWCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user

8

MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO, and may be diversity transmission, pre-coded transmission, beam forming transmission, or the like.

As shown in FIG. 2, an embodiment of the present disclosure provides a method for determining beam information, the method includes the following steps 201 to 203.

Step 201: receiving, by a forwarding node, one or more first parameters of beam indication information configured by a base station.

In this step, the beam indication information is used to indicate the beam information of an access link of the forwarding node. Optionally, the access link is a link between the terminal and the forwarding node.

Optionally, the forwarding node may be a network controlled repeater (NCR), or other nodes with a forwarding function, which is not specifically limited here.

Step 202: receiving, by the forwarding node, a first dynamic control information transmitted by the base station.

Optionally, the first dynamic control information may be downlink control information (DCI) or other downlink information.

Step 203: determining, by the forwarding node, one or more time domain locations indicated by the first dynamic control information and beam information corresponding to the one or more time domain locations according to the one or more first parameters and the first dynamic control information.

In this step, the one or more time domain locations and corresponding beam information indicated by the first dynamic control information are specifically: one or more time domain locations of the access link of the forwarding node and the beam information corresponding to the one or more time domain locations.

In at least one embodiment of the present disclosure, the one or more first parameters include one or more of the following:

a first numerical value $L_{max}$, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, including one or more of a time domain offset k0, a time domain start location (Start), and a time domain length (Length).

Optionally, the second numerical value refers to the maximum beam index value $Index_{max}$ that can be indicated in one first dynamic control information; the forwarding node may determine a quantity of bits required to indicate a beam index based on the maximum value $Index_{max}$, and the determination method is $\lceil log_2(Index_{max}) \rceil$. Alternatively, the second numerical value refers to the quantity of bits X required for beam indexes that can be indicated in one first dynamic control information, that is, $X = \lceil log_2(Index_{max}) \rceil$, and the forwarding node may calculate the maximum value $Index_{max}$ of the beam index that can be indicated in the first dynamic control information based on a calculation relationship between X and $Index_{max}$.

Optionally, the first numerical value $L_{max}$ refers to the maximum quantity of beams that can be indicated in one first dynamic control information; and it may be further used for determining a total quantity of bits required to indicate beam information, and the determination method is $L_{max} * \lceil log_2(Index_{max}) \rceil$.

As an optional embodiment, the time domain information is configured in a time domain list, where the time domain list includes a plurality of time indexes, and one piece of time domain information corresponding to each time index in the plurality of time indexes.

In other words, the one or more first parameters include a time domain list, and the time domain list includes a plurality of time domain information.

As another optional embodiment, the time domain information is configured in a time domain combination list, where the time domain combination list includes a plurality of time indexes and multiple pieces of time domain information corresponding to each time index in the plurality of time indexes.

In other words, the one or more first parameters include a time domain combination list, and the time domain combination list includes a plurality of "time domain lists", each of the time domain lists includes a plurality of time domain information.

In at least one embodiment of the present disclosure, the first dynamic control information includes:

a first quantity of beam indexes (beam index), the first quantity being equal to the first numerical value, namely $L_{max}$ beam indexes; optionally, a quantity of actually valid beam indexes may be less than or equal to $L_{max}$; and,

one or more time indexes (Time-index).

Optionally, in a case that a time domain list is configured in the one or more first parameters, the first dynamic control information carries multiple time indexes.

Optionally, in a case that a time domain combination list is configured in the one or more first parameters, the first dynamic control information carries a time index.

In at least one embodiment of the present disclosure, step 203 includes:

determining the first quantity of beam indexes and the one or more time indexes according to the one or more first parameters and the first dynamic control information;

determining the one or more time domain locations indicated by the first dynamic control information according to time domain information corresponding to the one or more time indexes;

determining a correspondence between the first quantity of beam indexes and one or more time domain information corresponding to the one or more time indexes according to a preset rule, where the beam indexes correspond to the time domain information in a one-to-one manner; and

determining the beam information corresponding to the one or more time domain locations according to the correspondence.

It should be noted that, after the forwarding node receives the first dynamic control information, a certain processing time is required from detecting the first dynamic control information to the beam indication taking effect. It is assumed that the first dynamic control information receiving position indicated by the dynamic beam is t0, and a time of an indicated beam application symbol position is t1, a duration of t1 - t0 should be greater than or equal to a threshold value N4. For different subcarrier spacings (SCS), N4 may have different values. For example, the value of N4 may be as follows:

SCS=15KHz, N4=10 symbols, or 11 symbols;
SCS=30KHz, N4=12 symbols, or 13 symbols;
SCS=60KHz, N4=28 symbols;
SCS=120KHz, N4=28 symbols.

As an optional embodiment, the method further includes: ignoring, by the forwarding node, indication of the first dynamic control information, in a case that a beam index included in the first dynamic control information is a third numerical value, and/or a time index included in the first dynamic control information is a fourth numerical value.

Optionally, the third numerical value is greater than the second numerical value, or the third numerical value is a preset value; the fourth numerical value is a preset value, or the fourth numerical value is greater than a maximum time index configured by the base station.

For example, Beam-index[1] = 31 (the maximum value configured by the base station is 27, so it is invalid); or Time-index[1] = reserved (or exceeding a range defined by the base station), then the forwarding node ignores the indication of Beam-index[1]/Time-index[1] in the first dynamic control information.

In an optional embodiment of the present disclosure, determining, according to a preset rule, a correspondence between the first numerical beam index and one or more time domain information corresponding to the one or more time indexes includes: in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner. For example:

Beam-index[0] corresponds to time domain information corresponding to Time-index[0];
Beam-index[1] corresponds to time domain information corresponding to Time-index[1];
Beam-index[2] corresponds to time domain information corresponding to Time-index[2], and so on.

In another optional embodiment of the present disclosure, the determining the correspondence between the first quantity of beam indexes and one or more time domain information corresponding to the one or more time indexes according to the preset rule includes: in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner. For example, the n-th row of the time domain combination list includes: time domain indication information-0 (described as: Time-index[0]), time domain indication information-1 (described as: Time-index[1]), time domain indication information-2 (described as: Time-index[2]), and time domain indication information-3 (described as: Time-index[3]);

the first valid Beam-index corresponds to the first valid "time domain information", such as Beam-index[0] corresponds to Time-index[0];

the second valid Beam-index corresponds to the second valid "time domain information", for example, Beam-index[1] corresponds to Time-index[1];

the third valid Beam-index corresponds to the third valid "time domain information", for example, Beam-index[2] corresponds to Time-index[2], and so on.

In at least one embodiment of the present disclosure, the time domain information includes two important information as follows: an time domain offset k0, representing an offset of an index of a slot where the time domain information is located relative to a reference slot; a time domain start location and a time domain length (Start&Length). The time domain start location (Start) and the time domain length (Length) may be encoded in the following two methods:

method 1, the time domain start location and the time domain length are indicated independently of each other; and
method 2, the time domain start location and the time domain length are jointly indicated, also referred to as the start and length indication value (start & length indication value, SLIV).

As an optional embodiment, with respect to the time domain offset k0, the method further includes: determining that a reference time domain location of the time domain offset of the time domain information corresponding to each time index is a first reference time domain location; or determining that a reference time domain location of the time domain offset of the time domain information corresponding to the time index is a time domain location indicated by a time domain offset of a previous time domain information.

The first reference time domain location includes: a time domain location where the first dynamic control information is received; or a time domain location where a hybrid automatic repeat request acknowledgment (HARQ-ACK) is fed back. The HARQ-ACK is ACK feedback for the first dynamic control information.

In another optional embodiment of the present disclosure, in a case that the time domain start location and the time domain length of the time domain information are jointly encoded, the method further includes: determining the time domain start location and the time domain length included in the time domain information according to a start and length indication value (SLIV) included in the time domain information and a first formula, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

For example, the time domain start location is a start symbol, and the time domain length is the quantity of symbols; the start symbol Start represents an offset of the symbol relative to the first symbol in a slot. If Start = 0, it indicates the first symbol of the slot; if Start = 1, it indicates the second symbol of the slot, and so on. For a normal CP, a slot includes 14 symbols, and the maximum value of Start is 13. For an extended CP, a slot includes 12 symbols, and the maximum value of Start is 11. The quantity of symbols Length indicates the time domain length (the quantity of symbols) indicated by the time domain information.

In an embodiment of the present disclosure, the minimum value of the Length is 1, and the maximum value of the Length may be 14, 28, or 42 (an integer multiple $N * 14$ of the quantity of symbols of the normal CP slot, assuming W=N*14); or the maximum value may be 12, 24, or 36 (or an integer multiple $N * 12$ of the quantity of symbols of the CP slot, $W = N * 12$).

It is assumed that L = Length; S = Start; $W = N * 14$, or $W = N * 12$, where N is an integer greater than or equal to 1. For each time domain information {start symbol Start, quantity of symbols Length}, the corresponding indication information may be determined as follows: if $(L - 1) \leq \left\lceil \frac{W}{2} \right\rceil$, $SLIV = W \cdot (L - 1) + S$; otherwise, $SLIV = W \cdot (W - L + 1) + (W - 1 - S)$.

In summary, in the embodiments of the present disclosure, a base station configures one or more first parameters of beam indication information for a forwarding node, and indicates one or more time domain locations of an access link of the forwarding node and the beam information corresponding to the one or more time domain locations through a first dynamic control information, thereby realizing dynamic indication of the one or more time domain locations of the access link of the forwarding node and the beam information by the base station, thereby improving the receiving performance on the side of the terminal.

As shown in FIG. 3, an embodiment of the present disclosure further provides a method for indicating beam information, the method includes the following steps 301 and 302.

Step 301: configuring, by a base station, one or more first parameters of beam indication information for a forwarding node.

In this step, the beam indication information is used to indicate the beam information of an access link of the forwarding node. Optionally, the access link is a link between a terminal and the forwarding node.

Optionally, the forwarding node may be a network controlled repeater (NCR), or other nodes with a forwarding function, which is not specifically limited here.

Step 302: transmitting, by the base station, a first dynamic control information to the forwarding node.

Optionally, the first dynamic control information may be downlink control information (DCI) or other downlink information.

The one or more first parameters and the first dynamic control information are used for determining one or more time domain locations indicated by the first dynamic control information and beam information corresponding to the one or more time domain locations.

In this step, the one or more time domain locations and corresponding beam information indicated by the first dynamic control information are specifically: one or more time domain locations of the access link of the forwarding node and the beam information corresponding to the one or more time domain locations.

In at least one embodiment of the present disclosure, the one or more first parameters include one or more of the following:

a first numerical value $L_{max}$, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, including one or more of a time domain offset k0, a time domain start location (Start), and a time domain length (Length).

Optionally, the second numerical value refers to the maximum value $Index_{max}$ of a beam index that is able to be indicated in one first dynamic control information; the forwarding node may determine a quantity of bits required to indicate a beam index based on the maximum value $Index_{max}$. and the determination method is $\lceil log_2(Index_{max}) \rceil$. Alternatively, the second numerical value refers to the quantity of bits X required for beam indexes that one first dynamic control information is capable of indicating, that is, $X = \lceil log_2(Index_{max}) \rceil$, and the forwarding node may calculate the maximum value $Index_{max}$ of the beam index that is able to be indicated in the first dynamic control information based on a calculation relationship between X and $Index_{max}$.

Optionally, the first numerical value $L_{max}$ refers to the maximum quantity of beams that one first dynamic control information is capable of indicating; and it may be further used for determining a total quantity of bits required to indicate beam information, and the determination method is $L_{max} * \lceil log_2(Index_{max}) \rceil$.

As an optional embodiment, the time domain information is configured in a time domain list, where the time domain list includes a plurality of time indexes, and one piece of time domain information corresponding to each time index in the plurality of time indexes.

In other words, the one or more first parameters include a time domain list, and the time domain list includes a plurality of time domain information.

As another optional embodiment, the time domain information is configured in a time domain combination list, where the time domain combination list includes a plurality of time indexes and multiple pieces of time domain information corresponding to each time index in the plurality of time indexes.

In other words, the one or more first parameters include a time domain combination list, and the time domain combination list includes a plurality of "time domain lists", each of the time domain lists includes a plurality of time domain information.

In at least one embodiment of the present disclosure, the first dynamic control information includes: a first quantity of beam indexes, the first quantity being equal to the first numerical value (beam index), namely $L_{max}$ beam indexes. Optionally, a quantity of actually valid beam indexes may be less than or equal to $L_{max}$ beam indexes; and, one or more time indexes (Time-index).

Optionally, in a case that a time domain list is configured in the one or more first parameters, the first dynamic control information carries multiple time indexes.

Optionally, in a case that a time domain combination list is configured in the one or more first parameters, the first dynamic control information carries a time index.

In an optional embodiment of the present disclosure, the method further includes: in a case that the time domain information is configured in the time domain list, configuring a correspondence between the first quantity of beam indexes and the one or more time domain information, according to a rule that the time indexes correspond to the time domain information in a one-to-one manner and a rule that the beam indexes correspond to the time indexes in a one-to-one manner. For example,

Beam-index[0] corresponds to time domain information indicated by Time-index[0];
Beam-index[1] corresponds to time domain information indicated by Time-index[1];
Beam-index[2] corresponds to time domain information indicated by Time-index[2], and so on.

In another optional embodiment of the present disclosure, the method further includes: in a case that the time domain information is configured in the time domain combination list, configuring a correspondence between the first quantity of beam indexes and the one or more time domain information, according to a rule that the time indexes correspond to the time domain information in a one-to-many manner and a rule that the beam indexes correspond to the time indexes in a many-to-one manner. For example, the n-th row of the time domain combination list includes: time domain indication information-0 (described as: Time-index[0]), time domain indication information-1 (described as: Time-index[1]), time domain indication information-2 (described as: Time-index[2]), time domain indication information-3 (described as: Time-index[3]);

the first valid Beam-index corresponds to the first valid "time domain information", for example, Beam-index[0] corresponds to Time-index[0];
the second valid Beam-index corresponds to the second valid "time domain information", for example, Beam-index[1] corresponds to Time-index[1];
the third valid Beam-index corresponds to the third valid "time domain information", for example, Beam-index[2] corresponds to Time-index[2], and so on.

In at least one embodiment of the present disclosure, the time domain information includes two important information as follows: an time domain offset k0, representing an offset of an index of a slot where the time domain information is located relative to a reference slot; a time domain start location and a time domain length (Start&Length). The time domain start location (Start) and the time domain length (Length) may be encoded in the following two methods:

method 1, the time domain start location and the time domain length are indicated independently of each other;
method 2, the time domain start location and the time domain length are jointly indicated, also referred to as the start and length indication value (start & length indication value, SLIV).

As an optional embodiment, with respect to the time domain offset k0, the method further includes: determining that a reference time domain location of the time domain offset of the time domain information corresponding to each time index is a first reference time domain location; or determining that a reference time domain location of the time domain offset of the time domain information corresponding to the time index is a time domain location indicated by a time domain offset of a previous time domain information.

The first reference time domain location includes: a time domain location where the first dynamic control information is received; or a time domain location where a hybrid automatic repeat request acknowledgment (HARQ-ACK) is fed back. The HARQ-ACK is ACK feedback for the first dynamic control information.

In another optional embodiment of the present disclosure, in a case that the time domain start location and the time domain length of the time domain information are jointly encoded, the method further includes: determining a start and length indication value (SLIV) included in the time domain information according to a first formula, the time domain start location and the time domain length, where the first formula is: SLIV = W · (L - 1) + S, or SLIV = W · (W - L + 1) + (W - 1 - S), where $0 < L \leq W - S$, L denotes the time domain length; S denotes the time domain start location, and S is an integer greater than or equal to 0, and less than or equal to 13; W = N * 14 or W = N * 12, and N is an integer greater than or equal to 1.

For example, the time domain start location is a start symbol, and the time domain length is the quantity of symbols; the start symbol Start represents an offset of the symbol relative to the first symbol in a slot. If Start = 0, it indicates the first symbol of the slot; if Start = 1, it indicates the second symbol of the slot, and so on. For a normal CP, a slot includes 14 symbols, and the maximum value of Start is 13. For an extended CP, a slot includes 12 symbols, and the maximum value of Start is 11. The quantity of symbols Length indicates the time domain length (the quantity of symbols) indicated by the time domain information.

In an embodiment of the present disclosure, the minimum value of the Length is 1, and the maximum value of the Length may be 14, 28, or 42 (an integer multiple N * 14 of the quantity of symbols of the normal CP slot, assuming W=N*14); or the maximum value may be 12, 24, or 36 (or an integer multiple N * 12 of the quantity of symbols of the CP slot, W = N * 12).

It is assumed that L = Length; S = Start; W = N * 14, or W = N * 12, where N is an integer greater than or equal to 1. For each time domain information {start symbol Start, quantity of symbols Length}, the corresponding indication information may be determined as follows: if $(L - 1) \leq \left\lceil \dfrac{W}{2} \right\rceil$, SLIV = W · (L - 1) + S; otherwise, SLIV = W · (W - L + 1) + (W - 1 - S).

In summary, in the embodiments of the present disclosure, a base station configures one or more first parameters of beam indication information for a forwarding node, and indicates one or more time domain locations of an access link of the forwarding node and the beam information corresponding to the one or more time domain locations through a first dynamic control information. In this way, the base station can dynamically indicate the one or more time domain locations of the access link of the forwarding node and the beam information, thereby improving the receiving performance on the side of the terminal.

In order to more clearly describe the method for determining beam information and the method for indicating beam information provided by the embodiments of the present disclosure, two examples are provided below for illustration.

Example 1: a time domain list is configured in the one or more first parameters, and includes multiple time domain information.

It is assumed in the embodiment that during the configuration process, the base station configures a time domain list (step 1). The DCI dynamic indication signaling includes multiple time indexes.

In step 1, the base station configures one or more first parameters of beam indication information of an access link.

The base station configures the one or more first parameters of dynamic beam indication information through high-layer signaling, which includes the following:

$L_{max}$: the maximum quantity $L_{max}$ of beams indicated in a DCI;
$Index_{max}$: the maximum value of the beam index in a DCI.

$Index_{max}$ here refers to the maximum quantity of different beams supported by the forwarding node, which is used by the base station or the forwarding node to determine the quantity of bits required for each beam index, and the determination method is $\lceil log_2(Index_{max}) \rceil$ (or the base station may directly configure the quantity of bits required for each beam index, and the forwarding node calculates the maximum value of the maximum index).

$L_{max}$ refers to the maximum quantity of beams that can be indicated in a DCI, and is used for determining the total quantity of bits required to indicate beam information, and the determination method is $L_{max} * \lceil log_2(Index_{max}) \rceil$.

A time domain list is configured, which includes multiple time domain information. Each time domain information includes {slot offset k0, start symbol Start, quantity of symbols Length}. For example, the method of configuring the time domain list is as follows:

time domain list TimeDomainList::= SEQUENCE {

Reference subcarrier spacing 1, (used to calculate time domain information (SCS = 60KHz, 120KHZ, 240KHz))

multiple time domain information    time domain information [T_max] // defines T_max time domain information, which is used for determining the quantity of bits of each time domain indication information in the DCI indication, and is calculated as $\lceil log_2(T\_max) \rceil$

}

time domain information:: = SEQUENCE{

time index number;

reference subcarrier spacing 2, (used to calculate time domain information (SCS = 60KHz, 120KHz, 240KHz))

slot offset k0; // a value of k0 is in a range of 0-8, or 0-32

Start&Length: encoding information of the starting symbol Start and the quantity of symbols Length

}

It should be noted that in the above time domain list, the reference subcarrier spacing 1 may be optionally configured; in the time domain information, the reference subcarrier spacing 2 may be configured, so as to allow the base station to indicate beam information in different time domains more flexibly. In different beam information indicated by DCI, reference subcarrier spacings for calculating the time domain information are different. However, for multiple time domain information indicated by a same DCI, reference subcarrier spacings are the same, which can simplify the complexity of the NCR terminal.

It should be noted that when the reference subcarrier spacing 1 and the reference subcarrier spacing 2 are not configured, the reference subcarrier spacing is calculated according to a default subcarrier spacing, such as: using a subcarrier spacing of a control channel for transmitting the scheduling signaling.

It is assumed that T_max = 16, and configuration content of the time domain list is given as an example below.

Table 1: time domain list for beam indication (T_max = 16)

| index of row | time domain informati on | index of row | time domain informati on | index of row | time domain informati on | index of row | time domain information |
|---|---|---|---|---|---|---|---|
| 0 | K0=0 S=0,L=2 | 4 | K0=1 S=0,L=2 | 8 | K0=2 S=0,L=2 | 12 | K0=2 S=0,L=2 |
| 1 | K0=0 S=0,L=1 4 | 5 | K0=1 S=0,L=1 4 | 9 | K0=2 S=0,L=14 | 13 | K0=2 S=0,L=14 |
| 2 | K0=0 S=9,L=1 | 6 | K0=1 S=9,L=1 | 10 | K0=2 S=9,L=1 | 14 | K0=2 S=9,L=1 |
| 3 | K0=0 | 7 | K0=1 | 11 | K0=2 | 15 | reserved |

(continued)

| index of row | time domain informati on | index of row | time domain informati on | index of row | time domain informati on | index of row | time domain information |
|---|---|---|---|---|---|---|---|
| | S=6,L=2 2 | | S=6,L=2 2 | | S=6,L=22 | | |

It is assumed that $L_{max}$ = 7 and $Index_{max}$=28. T_max =16 (16 rows of indexes in the above table)

A DCI includes the following indication information:

7 beam index, the quantity of bits for each beam index is: $\lceil log_2(Index_{max})\rceil = 5$ ; and

7 time domain indication information, the quantity of bits for each time domain information is: $\lceil log_2(T\_max)\rceil = 4$.

In step 2, the forwarding node receives a DCI transmitted by the base station, and obtains and determines the one or more time domain locations and the corresponding beam information. Specifically, step 2 includes steps 2_1 to 2_3.

In step 2_1, the forwarding node receives the DCI, and may obtain that the DCI about the dynamic beam indication includes at least the following content according to the one or more first parameters configured by the base station:

Beam-index[7] //Description: 7 beam indexes, and the quantity of bits of each beam index being 5 bits, for a total of 35 bits; and

Time-index[7] //Description: 7 time indexes, and the quantity of bits of each beam index being 4 bits, for a total of 28 bits.

In step 2_2, a correspondence between "multiple beam indexes" and "multiple time domain information indicated by the time index Time-index" is determined.

Generally, the beam index and the time domain information are in a one-to-one manner correspondence, which may follow an ascending order. For example:

Beam-index[0] corresponds to time domain information indicated by Time-index[0]
Beam-index[1] corresponds to time domain information indicated by Time-index[1]
Beam-index[2] corresponds to time domain information indicated by Time-index[2], and so on.

For a certain index, when a corresponding Beam-index or Time-index is invalid, the beam information indication is invalid. For example, if Beam-index[1] = 31 (the maximum value configured by the base station is 27, so it is invalid), or Time-index[1] = reserved (or exceeds a range defined by the base station), NCR-MT ignores indication of Beam-index [1]/Time-index[1].

In step 2_3, a slot position of each time domain information indicated by the "time index Time-index" is determined. How to determine the slot offset k0 is mainly described in this example.

Method 1: K0 values of different time domain information correspond to a same reference slot position, which may be any of the following options.

option 1: for all time domain information as indicated, reference slot positions are: a slot position where the DCI is received;

option 2: for all indicated time domain information, reference slot positions are: a slot position where an HARQ-ACK is fed back, the HARQ-ACK is a NACK/ACK feedback for the dynamic beam indication DCI.

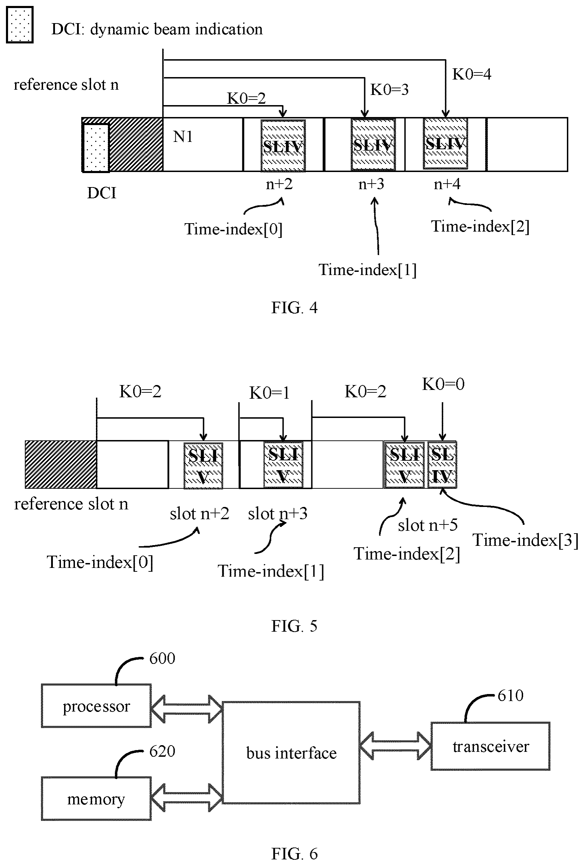

A same reference slot position is used by different time domain information, and is the slot position (slot n) where the DCI is received, as shown in FIG. 4. The reference slots of K0 of all three time domain information indicated by the DCI are slot n.

Method 2: among multiple time domain information as indicated, a slot position indicated by K0 of the previous time domain information is used as a reference slot position of K0 of subsequent time domain information. The description is as follows.

A reference slot of the first time domain information (or valid indication information) may be used for determining a position of the reference slot by using the method 1; (for example, for each time domain indication information, the reference slot position is: the slot position where the DCI is received).

A reference slot of the second time domain information (or valid indication information) is a slot indicated by K0 in the first time domain.

A reference slot of the third time domain indication information (or valid indication information) is a slot indicated by K0 in the second time domain, and so on.

The slot position (slot n) where the DCI is received is shown in FIG. 5. The DCI indicates 4 time domain indication information. wherein,

Time-index[0], a reference slot of K0 is slot n, if k0=2, a slot corresponding to SLIV information is slot n+2;

Time-index[1], a reference slot of K1 is a slot where the last symbol in an SLIV of Time-index[0] is located, if k0=1, the slot corresponding to the SLIV information is slot n+3;

Time-index[2], the reference slot of K1 is the slot where the last symbol in an SLIV of Time-index[1] is located, if k0=2, the slot corresponding to the SLIV information is slot n+5;

Time-index[3], a reference slot of K1 is a slot where the last symbol in an SLIV of Time-index[2] is located, if k0=0, a slot corresponding to SLIV information is slot n+5.

It should be noted that, in a case that the time domain information indicated by SLIV does not cross slots (that is, a start symbol and an end symbol are in a same slot), a reference slot position may be calculated according to a slot position determined by K0 of the previous time domain information. In a case that it crosses slots (the start symbol and the end symbol are not in the same slot), the reference slot needs to be modified to a "slot where the last symbol indicated in SLIV is located" in the previous indicated time domain information when calculating the reference slot.

Example 2: a time domain combination list is configured, and the time domain combination list includes multiple "time domain lists".

It is assumed in the embodiment that during the configuration process, the base station configures a time domain combination list. The DCI dynamic indication signaling includes a time index (but the time index may point to multiple time domain information according to content configured by the base station).

The base station configures the one or more first parameters of dynamic beam indication information through high-layer signaling, which includes the following:

$L_{max}$: the maximum quantity $L_{max}$ of beams indicated in a DCI;

$Index_{max}$: the maximum value of the beam index in a DCI.

$Index_{max}$ here refers to the maximum quantity of different beams supported by the forwarding node, which is used by the base station or the forwarding node to determine the quantity of bits required for each beam index, and is determined

as $\lceil log_2(Index_{max}) \rceil$ (or the base station may directly configure the quantity of bits required for each beam index, and the forwarding node calculates the maximum value of the maximum index).

$L_{max}$ refers to the maximum quantity of beams that can be indicated in a DCI, and is used for determining the total quantity of bits required to indicate beam information, and the determination method is $L_{max} * \lceil log_2(Index_{max}) \rceil$.

A time domain combination list is configured, which includes multiple time domain lists (multiple rows), and each time domain list includes multiple time domain information (multiple columns). Each time domain information includes {slot offset k0, start symbol Start, quantity of symbol Length}. For example, the method of configuring the time domain combination list is as follows:

time domain combination list TimeDomainOfBeamCombiantionList::= SEQUENCE {

multiple time domain list; TimeDomainList[T_maxComb]; // defining T_maxCombg time domain lists, used for determining the quantity of bits for the time domain index indicated by the DCI, which is calculated as $\lceil log_2(T_{maxComb}) \rceil$

}

time domain list TimeDomainList::= SEQUENCE {

reference subcarrier spacing, (used to calculate time domain information (SCS = 60KHz, 120KHz, 240KHz))

multiple time domain information time domain information [T_num_perRow] // defining T_num_perRow time domain information, used for determining the quantity of time domain information indicated by a corresponding DCI

}

time domain information::= SEQUENCE {

time domain index;

a time domain offset k0; // a value of k0 is in a range of 0-8, or 0-32

Start&Length: encoding information of the starting symbol Start and the quantity of symbols Length

}

It should be noted that when the above-mentioned reference subcarrier spacing is not configured, the reference subcarrier spacing is calculated based on a default subcarrier spacing, such as: a subcarrier spacing of a control channel using a transmission scheduling signaling.

It is assumed that $T_{maxComb}$ = 16, and configuration content of the time domain combination list is given as an example below.

Table 2: time domain combination list for beam indication ($T_{maxComb}$ = 16)

| index of row (information list) | time domain indication information -0 | time domain indication information -1 | time domain indication information -2 | time domain indication information -3 | comment |
|---|---|---|---|---|---|
| 0 | K0=0; S=0, L=2 | K0=1; S=0, L=2 | K0=2; S=0, L=2 | K0=3; S=0, L=2 | T_num_pe rRow=4 |

(continued)

| index of row (information list) | time domain indication information -0 | time domain indication information -1 | time domain indication information -2 | time domain indication information -3 | comment |
|---|---|---|---|---|---|
| 1 | K0=0; S=0, L=14 | K0=1; S=0, L=14 | K0=2; S=0, L=14 | K0=2; S=0, L=14 | T_num_perRow=4 |
| 2 | K0=0; S=9, L=1 | K0=1; S=9, L=1 | K0=2; S=9, L=1 | K0=2; S=9, L=1 | T_num_perRow=4 |
| 3 | K0=0; S=6, L=22 | K0=1; S=6, L=22 | K0=2; S=6, L=22 | reserved | T_num_perRow=3 |
| 4 | K0=2; S=9, L=1 | K0=1; S=9, L=5 | K0=4; S=9, L=1 | K0=2; S=9, L=1 | T_num_perRow=4 |
| 5 | K0=2; S=9, L=1 | K0=3; S=9, L=3 | K0=4; S=9, L=1 | K0=2; S=9, L=1 | T_num_perRow=4 |
| 6 | K0=3; S=9, L=1 | K0=1; S=9, L=2 | K0=5; S=9, L=1 | K0=7; S=9, L=1 | T_num_perRow=4 |
| 7 | K0=2; S=2, L=1 | K0=1; S=8, L=5 | reserved | reserved | T_num_perRow=2 |
| 8 | K0=2; S=2, L=1 | K0=3; S=8, L=3 | K0=4; S=9, L=1 | K0=2; S=9, L=1 | T_num_perRow=4 |
| 9 | K0=3; S=2, L=1 | K0=2; S=9, L=2 | K0=5; S=9, L=1 | K0=7; S=9, L=1 | T_num_perRow=4 |
| 10 | K0=3; S=9, L=1 | K0=1; S=9, L=5 | K0=4; S=9, L=1 | K0=2; S=9, L=1 | T_num_perRow=4 |
| 11 | K0=2; S=9, L=1 | K0=3; S=5, L=3 | K0=4; S=9, L=1 | reserved | T_num_perRow=3 |
| 12 | K0=3; S=9, L=1 | K0=1; S=9, L=2 | K0=5; S=13, L=1 | K0=7; S=9, L=1 | T_num_perRow=4 |
| 13 | K0=2; S=2, L=1 | K0=1; S=8, L=5 | K0=4; S=9, L=1 | K0=2; S=12, L=1 | T_num_perRow=4 |
| 14 | K0=3; S=2, L=1 | K0=3; S=8, L=3 | K0=4; S=9, L=1 | reserved | T_num_perRow=3 |
| 15 | K0=3; S=2, L=1 | K0=2; S=9, L=2 | K0=5; S=9, L=1 | K0=7; S=6, L=1 | T_num_perRow=4 |

In the above table, the numbers T_num_perRow of time domain information configured in multiple rows may have different values (Note: the number T_num_perRow of valid time domain indication information actually configured may be determined by the forwarding node based on information configured by the base station, and there is no need to actually configure this parameter). It is assumed that in all configuration rows, the maximum value of T_num_perRow is L_max (for example, the maximum value in the above table is 4).

It is assumed that T - maxOfRow = 4 (i.e., $L_{max}$ = 4), $Index_{max}$ = 28. $T_{maxComb}$ = 16.

A DCI includes the following indication information:

indication of 4 beam indexes, the quantity of bits for each beam index is $\lceil log_2(\text{Index}_{max}) \rceil = 5$; and

one time domain information combination index (this index indicates up to 4 time domain information), the quantity of bits for indicating the information are $\lceil log_2(\text{T}_{maxComb}) \rceil = 4$.

In step 2, the forwarding node receives a DCI transmitted by the base station, and obtains and determines one or more time domain locations and corresponding beam information. Specifically, it includes steps 2_1 to 2_3.

In step 2_1, the forwarding node receives the DCI, and may obtain that the DCI about the dynamic beam indication includes at least the following content according to the one or more first parameters configured by the base station:

Beam-index[4] //Description: indication of 4 beam indexes, the quantity of bits of each beam index being 5 bits, for a total of 20 bits; and

TimeComb-index //Description: 1 time index, and the quantity of bits of the time index being 4 bits.

In step 2_2, a correspondence between "multiple beam indexes" and "multiple time domain information indicated by the time index Time-index" is determined.

It is assumed that a row index indicated by TimeComb-index is n, multiple time domain information of the indicated row may be determined according to the configured information combination list. For example, the n-th row of the time domain combination list includes: time domain indication information-0 (described as: Time-index[0]), time domain indication information-1 (described as: Time-index[1]), time domain indication information-2 (described as: Time-index[2]), time domain indication information-3 (described as: Time-index[3]);

the first valid Beam-index corresponds to the first valid "time domain information", for example, Beam-index[0] corresponds to Time-index[0];

the second valid Beam-index corresponds to the second valid "time domain information", for example, Beam-index[1] corresponds to Time-index[1];

the third valid Beam-index corresponds to the third valid "time domain information", for example, Beam-index[2] corresponds to Time-index[2], and so on.

In step 2_3, a slot position of each time domain information indicated by the "time index Time-index" is determined. How to determine the slot offset k0 is mainly described in this example.

Method 1: K0 values of different time domain information correspond to a same reference slot position, which may be any of the following options.

option 1: for all time domain information as indicated, reference slot positions are: a slot position where the DCI is received;

option 2: for all indicated time domain information, reference slot positions are: a slot position where an HARQ-ACK is fed back, the HARQ-ACK a NACK/ACK feedback for the dynamic beam indication DCI.

A same reference slot position is used by different time domain information, and is the slot position (slot n) where the DCI is received, as shown in FIG. 4. The reference slots of K0 of all three time domain information indicated by the DCI are slot n.

Method 2: among multiple time domain information as indicated, a slot position indicated by K0 of the previous time domain information is used as a reference slot position of K0 of subsequent time domain information. The description is as follows.

A reference slot of the first time domain information (or valid indication information) may be used for determining a position of the reference slot by using the method 1; (for example, for each time domain indication information, the reference slot position is: the slot position where the DCI is received).

A reference slot of the second time domain information (or valid indication information) is a slot indicated by K0 in the first time domain.

A reference slot of the third time domain indication information (or valid indication information) is a slot indicated by K0 in the second time domain, and so on.

The slot position (slot n) where the DCI is received is shown in FIG. 5. The DCI indicates 4 time domain indication information.

Time-index[0], a reference slot of K0 is slot n, if k0=2, a slot corresponding to SLIV information is slot n+2;

Time-index[1], a reference slot of K1 is a slot where the last symbol in an SLIV of Time-index[0] is located, if k0=1, the slot corresponding to the SLIV information is slot n+3;

Time-index[2], the reference slot of K1 is the slot where the last symbol in an SLIV of Time-index[1] is located, if k0=2, the slot corresponding to the SLIV information is slot n+5;

Time-index[3], a reference slot of K1 is a slot where the last symbol in an SLIV of Time-index[2] is located, if k0=0, a slot corresponding to SLIV information is slot n+5.

It should be noted that the time domain combination list in this example (such as Table 2) may also be defined as a one-dimensional parameter table (such as Table 1). In the DCI, when multiple time domain information is indicated, a position of the first time domain information is indicated, and the following $L\_max - 1$ time domain information are obtained in sequence starting from the first time domain location. For example, the base station defines 1000 entry elements of the time domain, i.e., list time-list[1000], and $L\_max = 8$. The base station indicates the first time domain information first_time=100 in the DCI. Then the terminal reads a total of 8 time domain information including time-list[100], time-list[101], time-list[102]..., time-list[107], as time domain parameters of the beam indication.

As shown in FIG. 6, an embodiment of the present disclosure further provides a forwarding node, including a memory 620, a transceiver 610 and a processor 600. The memory 620 is configured to store a computer program; the transceiver 610 is configured to transmit and receive data under the control of the processor 600; the processor 600 is configured to read the computer program in the memory 620 to perform the following steps:

> receiving one or more first parameters of beam indication information configured by a base station;
> receiving a first dynamic control information transmitted by the base station; and
> determining one or more time domain locations indicated by the first dynamic control information and beam information corresponding to the one or more time domain locations according to the one or more first parameters and the first dynamic control information.

As an optional embodiment, the one or more first parameters include one or more of the following:

> a first numerical value, used for determining a maximum quantity of beams that one first dynamic control information is capable of indicating;
> a second numerical value, used for determining a maximum beam index or a quantity of bits used for the maximum beam index that one first dynamic control information is capable of indicating; or
> time domain information, including one or more of a time domain offset, a time domain start location, or a time domain length.

As an optional embodiment, the first dynamic control information includes: a first quantity of beam indexes, the first quantity being equal to the first numerical value; and one or more time indexes.

As an optional embodiment, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

As an optional embodiment, the processor 600 is further configured to read the computer program in the memory 620 to perform the following steps:

> determining the first quantity of beam indexes and the one or more time indexes according to the one or more first parameters and the first dynamic control information;
> determining the one or more time domain locations indicated by the first dynamic control information according to time domain information corresponding to the one or more time indexes;
> determining a correspondence between the first quantity of beam indexes and one or more time domain information corresponding to the one or more time indexes according to a preset rule, where the beam indexes correspond to the time domain information in a one-to-one manner; and
> determining the beam information corresponding to the one or more time domain locations according to the correspondence.

As an optional embodiment, the processor 600 is further configured to read the computer program in the memory 620 to perform the following steps: ignoring, by the forwarding node, indication of the first dynamic control information, in a case that a beam index included in the first dynamic control information is a third numerical value, and/or a time index included in the first dynamic control information is a fourth numerical value.

As an optional embodiment, the third numerical value is greater than the second numerical value, or the third numerical value is a preset value; the fourth numerical value is a preset value, or the fourth numerical value is greater than a maximum time index configured by the base station.

As an optional embodiment, the processor 600 is further configured to read the computer program in the memory 620 to perform the following steps:

> in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

As an optional embodiment, the processor 600 is further configured to read the computer program in the memory 620 to perform the following steps:

determining that a reference time domain location of the time domain offset of the time domain information corresponding to each time index is a first reference time domain location; or

determining that a reference time domain location of the time domain offset of the time domain information corresponding to the time index is a time domain location indicated by a time domain offset of a previous time domain information.

As an optional embodiment, the first reference time domain location includes: a time domain location where the first dynamic control information is received; or a time domain location where a hybrid automatic repeat request acknowledgment (HARQ-ACK) is fed back.

As an optional embodiment, in a case that the time domain start location and the time domain length of the time domain information are jointly encoded, the processor 600 is further configured to read the computer program in the memory 620 to perform the following steps: determining the time domain start location and the time domain length included in the time domain information according to a start and length indication value (SLIV) included in the time domain information and a first formula, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

As shown in FIG. 6, the bus architecture may include any quantity of interconnected buses and bridges. Specifically, various circuits of one or more processors represented by the processor 600 and a memory represented by the memory 620 are linked together. The bus architecture may also link various other circuits such as peripheral devices, voltage regulators, power management circuits, etc., which are well-known in the art, and therefore, no further descriptions are provided herein. The bus interface provides an interface. The transceiver 610 may be a plurality of elements, that is, include a transmitter and a receiver, and provide a unit for communicating with various other devices on a transmission media. The transmission media include transmission media such as wireless channels, wired channels, and optical cables. The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA) or a complex programmable logic device (CPLD). The processor may also adopt a multi-core architecture.

In an embodiment of the present disclosure, the base station configures one or more first parameters of beam indication information for a forwarding node, and indicates one or more time domain locations of an access link of the forwarding node and corresponding beam information through a first dynamic control information, thereby enabling the base station to dynamically indicate the one or more time domain locations of the access link of the forwarding node and the beam information, thereby improving the receiving performance on the terminal side.

It should be noted that the above forwarding node provided in the embodiment of the present disclosure can implement all method steps implemented in the above method embodiments, and can achieve the same technical effects. Therefore, the description and the beneficial effect of this embedment that are the same as the method embodiments will not be introduced here in detail.

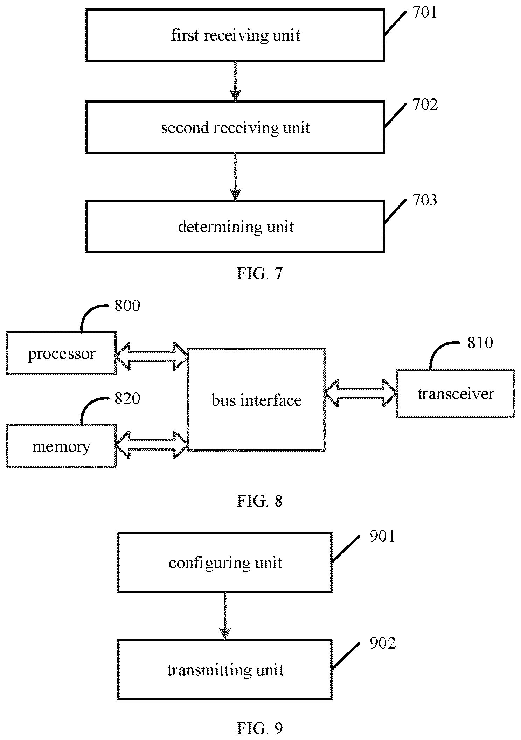

As shown in FIG. 7, an embodiment of the present disclosure further provides an apparatus for determining beam information, including:

a first receiving unit 701, configured to receive one or more first parameters of beam indication information configured by a base station;

a second receiving unit 702, configured to receive a first dynamic control information transmitted by the base station; and

a determining unit 703, configured to determine one or more time domain locations indicated by the first dynamic control information and beam information corresponding to the one or more time domain locations according to the one or more first parameters and the first dynamic control information.

As an optional embodiment, the one or more first parameters include one or more of the following:

a first numerical value, used for determining a maximum quantity of beams that one first dynamic control information is capable of indicating;

a second numerical value, used for determining a maximum beam index or a quantity of bits used for the maximum beam index that one first dynamic control information is capable of indicating; or

time domain information, including one or more of a time domain offset, a time domain start location, or a time domain length.

As an optional embodiment, the first dynamic control information includes: a first quantity of beam indexes, the first quantity being equal to the first numerical value; and one or more time indexes.

As an optional embodiment, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes. the time domain information is configured in a time domain list; where the time domain list includes multiple time indexes and a time domain information corresponding to each time index in the multiple time indexes;

As an optional embodiment, the determining unit is further configured to:

determine the first quantity of beam indexes and the one or more time indexes according to the one or more first parameters and the first dynamic control information;

determine the one or more time domain locations indicated by the first dynamic control information according to time domain information corresponding to the one or more time indexes;

determine a correspondence between the first quantity of beam indexes and one or more time domain information corresponding to the one or more time indexes according to a preset rule, where the beam indexes correspond to the time domain information in a one-to-one manner; and

determine the beam information corresponding to the one or more time domain locations according to the correspondence.

As an optional embodiment, the apparatus further includes: an ignoring unit, configured to ignore indication of the first dynamic control information, in a case that a beam index included in the first dynamic control information is a third numerical value, and/or a time index included in the first dynamic control information is a fourth numerical value.

As an optional embodiment, the third numerical value is greater than the second numerical value, or the third numerical value is a preset value; the fourth numerical value is a preset value, or the fourth numerical value is greater than a maximum time index configured by the base station.

As an optional embodiment, the determining unit is further configured to:

in a case that the time domain information is configured in the time domain list, determine the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determine the correspondence between the first quantity of beam indexes and the one or more time domain information, according to a rule that the time indexes correspond to the time domain information in a one-to-many manner and a rule that the beam indexes correspond to the time indexes in a many-to-one manner.

As an optional embodiment, the apparatus further includes: a first reference time domain determining unit, configured to: determine that a reference time domain location of the time domain offset of the time domain information corresponding to each time index is a first reference time domain location; or determine that a reference time domain location of the time domain offset of the time domain information corresponding to the time index is a time domain location indicated by a time domain offset of a previous time domain information.

As an optional embodiment, the first reference time domain location includes: a time domain location where the first dynamic control information is received; or a time domain location where a hybrid automatic repeat request acknowledgment (HARQ-ACK) is fed back.

As an optional embodiment, in a case that the time domain start location and the time domain length of the time domain information are jointly encoded, the apparatus further includes: a first time domain determining unit, configured to determine the time domain start location and the time domain length included in the time domain information according to a start and length indication value (SLIV) included in the time domain information and a first formula, where the first formula is: SLIV = W. (L - 1) + S, or SLIV = W · (W - L + 1) + (W - 1 - S), where 0 < L ≤ W - S, L denotes the time domain length; S denotes the time domain start location, and S is an integer greater than or equal to 0, and less than or equal to 13; W = N * 14 or W = N * 12, and N is an integer greater than or equal to 1.

In an embodiment of the present disclosure, the base station configures one or more first parameters of beam indication information for a forwarding node, and indicates one or more time domain locations of an access link of the forwarding node and corresponding beam information through a first dynamic control information, thereby enabling the base station to dynamically indicate the one or more time domain locations of the access link of the forwarding node and the beam information, thereby improving the receiving performance on the terminal side.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

As shown in FIG. 8, an embodiment of the present disclosure further provides a base station, including a memory 820, a transceiver 810, and a processor 800. The memory 820 is configured to store a computer program; the transceiver 810 is configured to transmit and receive data under the control of the processor 800; the processor 800 is configured to read the computer program in the memory 820 to perform the following steps:

configuring one or more first parameters of beam indication information for a forwarding node; and
transmitting a first dynamic control information to the forwarding node, where the one or more first parameters and the first dynamic control information are used for determining one or more time domain locations indicated by the first dynamic control information and beam information corresponding to the one or more time domain locations.

As an optional embodiment, the one or more first parameters include one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, including one or more of a time domain offset, a time domain start location, or a time domain length.

As an optional embodiment, the first dynamic control information includes: a first quantity of beam indexes, the first quantity being equal to the first numerical value; and one or more time indexes.

As an optional embodiment, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

As an optional embodiment, the processor 800 is further configured to read the computer program in the memory 820 to perform the following steps:

in a case that the time domain information is configured in the time domain list, configuring a correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, configuring a correspondence between the first quantity of beam indexes and the one or more time domain information, according to a rule that the time indexes correspond to the time domain information in a one-to-many manner and a rule that the beam indexes correspond to the time indexes in a many-to-one manner.

As an optional embodiment, the processor 800 is further configured to read the computer program in the memory 820 to perform the following steps: determining that a reference time domain location of the time domain offset of the time domain information corresponding to each time index is a first reference time domain location; or determining that a reference time domain location of the time domain offset of the time domain information corresponding to the time index is a time domain location indicated by a time domain offset of a previous time domain information.

As an optional embodiment, the first reference time domain location includes: a time domain location where the first dynamic control information is received; or, a time domain location where an HARQ-ACK is fed back.

As an optional embodiment, in a case that the time domain start location and the time domain length of the time domain information are jointly encoded, the processor 800 is further configured to read the computer program in the memory 820 to perform the following steps: determining a start and length indication value (SLIV) included in the time domain information according to a first formula, the time domain start location and the time domain length, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

As shown in FIG. 8, the bus architecture may include any quantity of interconnected buses and bridges. Specifically, various circuits of one or more processors represented by the processor 800 and a memory represented by the memory 820 are linked together. The bus architecture may also link various other circuits such as peripheral devices, voltage regulators, power management circuits, etc., which are well-known in the art, and therefore, no further descriptions are provided herein. The bus interface provides an interface. The transceiver 810 may be a plurality of elements, that is, include a transmitter and a receiver, and provide a unit for communicating with various other devices on a transmission media. The transmission media include transmission media such as wireless channels, wired channels, and optical cables. The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA) or a complex programmable logic device (CPLD). The processor may also adopt a multi-core architecture.

In an embodiment of the present disclosure, a base station configures one or more first parameters of beam indication information for a forwarding node, and indicates one or more time domain locations of an access link of the forwarding node and corresponding beam information through a first dynamic control information, thereby enabling the base station to dynamically indicate the one or more time domain locations of the access link of the forwarding node and the beam information, thereby improving the receiving performance on the terminal side.

It should be noted that the above base station provided in the embodiment of the present disclosure can implement all method steps implemented in the above method embodiments, and can achieve the same technical effects. Therefore, the description and the beneficial effect of this embedment that are the same as the method embodiments will not be introduced here in detail.

As shown in FIG. 9, the embodiment of the present disclosure further provides an apparatus for indicating beam information, including:

a configuring unit 901, configured to configure one or more first parameters of beam indication information for a forwarding node; and

a transmitting unit 902, configured to transmit a first dynamic control information to the forwarding node, where the one or more first parameters and the first dynamic control information are used for determining one or more time domain locations indicated by the first dynamic control information and beam information corresponding to the one or more time domain locations.

As an optional embodiment, the one or more first parameters include one or more of the following:

a first numerical value, used for determining a maximum quantity of beams that one first dynamic control information is capable of indicating;

a second numerical value, used for determining a maximum beam index or a quantity of bits used for the maximum beam index that one first dynamic control information is capable of indicating; or

time domain information, including one or more of a time domain offset, a time domain start location, or a time domain length.

As an optional embodiment, the first dynamic control information includes: a first quantity of beam indexes, the first quantity being equal to the first numerical value; and one or more time indexes.

As an optional embodiment, the time domain information is configured in a time domain list, where the time domain list includes a plurality of time indexes and one piece of time domain information corresponding to each time index in the plurality of time indexes; or the time domain information is configured in a time domain combination list, where the time domain combination list includes a plurality of time indexes and multiple pieces of time domain information corresponding to each time index in the plurality of time indexes.

As an optional embodiment, the apparatus further includes: a correspondence configuring unit, configured to:

in a case that the time domain information is configured in the time domain list, configuring a correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, configuring a correspondence between the first quantity of beam indexes and the one or more time domain information, according to a rule that the time indexes correspond to the time domain information in a one-to-many manner and a rule that the beam indexes correspond to the time indexes in a many-to-one manner.

As an optional embodiment, the apparatus further includes: a second reference time domain determining unit, configured to determine that a reference time domain location of the time domain offset of the time domain information corresponding to each time index is a first reference time domain location; or determine that a reference time domain location of the time domain offset of the time domain information corresponding to the time index is a time domain location indicated by a time domain offset of a previous time domain information.

As an optional embodiment, the first reference time domain location includes: a time domain location where the first dynamic control information is received; or, a time domain location where an HARQ-ACK is fed back.

As an optional embodiment, in a case that the time domain start location and the time domain length of the time domain information are jointly encoded, the apparatus further includes: a second time domain determining unit, configured to determine determining a start and length indication value (SLIV) included in the time domain information according to a first formula, the time domain start location and the time domain length, where the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

In an embodiment of the present disclosure, a base station configures one or more first parameters of beam indication information for a forwarding node, and indicates one or more time domain locations of an access link of the forwarding node and corresponding beam information through a first dynamic control information, thereby enabling the base station to dynamically indicate the one or more time domain locations of the access link of the forwarding node and the beam information, thereby improving the receiving performance on the terminal side.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor-readable storage medium, where the processor-readable storage medium stores a computer program. The computer program is used for causing the processor to execute steps in the above method embodiments. The processor-readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor-readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

**Claims**

1. A method for determining beam information, comprising:

   receiving, by a forwarding node, one or more first parameters of beam indication information configured by a base station;
   receiving, by the forwarding node, a first dynamic control information transmitted by the base station; and
   determining, by the forwarding node, one or more time domain locations indicated by the first dynamic control information and beam information corresponding to the one or more time domain locations according to the one or more first parameters and the first dynamic control information.

2. The method according to claim 1, wherein the one or more first parameters comprise one or more of the following:

   a first numerical value, used for determining a maximum quantity of beams that one first dynamic control information is capable of indicating;
   a second numerical value, used for determining a maximum beam index or a quantity of bits used for the maximum beam index that one first dynamic control information is capable of indicating; or
   time domain information, comprising one or more of a time domain offset, a time domain start location, or a time domain length.

3. The method according to claim 2, wherein the first dynamic control information comprises:

   a first quantity of beam indexes, the first quantity being equal to the first numerical value; and
   one or more time indexes.

4. The method according to claim 3, wherein

   the time domain information is configured in a time domain list, wherein the time domain list comprises a plurality of time indexes, and one piece of time domain information corresponding to each time index in the plurality of time indexes; or
   the time domain information is configured in a time domain combination list, wherein the time domain combination list comprises a plurality of time indexes, and multiple pieces of time domain information corresponding to each time index in the plurality of time indexes.

5. The method according to claim 4, wherein the determining the one or more time domain locations indicated by the first dynamic control information and the beam information corresponding to the one or more time domain locations according to the one or more first parameters and the first dynamic control information comprises:

determining the first quantity of beam indexes and the one or more time indexes according to the one or more first parameters and the first dynamic control information;
determining the one or more time domain locations indicated by the first dynamic control information according to time domain information corresponding to the one or more time indexes;
determining a correspondence between the first quantity of beam indexes and one or more time domain information corresponding to the one or more time indexes according to a preset rule, wherein the beam indexes correspond to the time domain information in a one-to-one manner; and
determining the beam information corresponding to the one or more time domain locations according to the correspondence.

6. The method according to claim 5, further comprising:
ignoring, by the forwarding node, indication of the first dynamic control information, in a case that a beam index comprised in the first dynamic control information is a third numerical value, and/or a time index comprised in the first dynamic control information is a fourth numerical value.

7. The method according to claim 6, wherein the third numerical value is greater than the second numerical value, or the third numerical value is a preset value;
the fourth numerical value is a preset value, or the fourth numerical value is greater than a maximum time index configured by the base station.

8. The method according to claim 5, wherein the determining the correspondence between the first quantity of beam indexes and the one or more time domain information corresponding to the one or more time indexes according to the preset rule comprises:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

9. The method according to claim 5, further comprising:

determining that a reference time domain location of the time domain offset of the time domain information corresponding to each time index is a first reference time domain location; or
determining that a reference time domain location of the time domain offset of the time domain information corresponding to the time index is a time domain location indicated by a time domain offset of a previous time domain information.

10. The method according to claim 9, wherein the first reference time domain location comprises:

a time domain location where the first dynamic control information is received; or
a time domain location where a hybrid automatic repeat request acknowledgment (HARQ-ACK) is fed back.

11. The method according to claim 5, wherein in a case that the time domain start location and the time domain length of the time domain information are indicated independently of each other, a minimum value of the time domain length is 1, and a maximum value of the time domain length is one of 14, 28, or 42; or
in a case that the time domain start location and the time domain length of the time domain information are indicated independently of each other, a minimum value of the time domain length is 1, and a maximum value of the time domain length is one of 12, 24, or 36.

12. The method according to claim 5, wherein in a case that the time domain start location and the time domain length of the time domain information are jointly encoded, the method further comprises:

determining the time domain start location and the time domain length comprised in the time domain information according to a start and length indication value (SLIV) comprised in the time domain information and a first formula, wherein the first formula is: $SLIV = W \cdot (L - 1) + S$, or $SLIV = W \cdot (W - L + 1) + (W - 1 - S)$, wherein $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

13. A method for indicating beam information, comprising:

configuring, by a base station, one or more first parameters of beam indication information for a forwarding node; and
transmitting, by the base station, a first dynamic control information to the forwarding node,
wherein the one or more first parameters and the first dynamic control information are used for determining one or more time domain locations indicated by the first dynamic control information and beam information corresponding to the one or more time domain locations.

14. The method according to claim 13, wherein the one or more first parameters comprise one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, comprising one or more of a time domain offset, a time domain start location, or a time domain length.

15. The method according to claim 14, wherein the first dynamic control information comprises:

a first quantity of beam indexes, the first quantity being equal to the first numerical value; and
one or more time indexes.

16. The method according to claim 15, wherein

the time domain information is configured in a time domain list, wherein the time domain list comprises a plurality of time indexes and one piece of time domain information corresponding to each time index in the plurality of time indexes; or
the time domain information is configured in a time domain combination list, wherein the time domain combination list comprises a plurality of time indexes and multiple pieces of time domain information corresponding to each time index in the plurality of time indexes.

17. The method according to claim 16, further comprising:

in a case that the time domain information is configured in the time domain list, configuring a correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, configuring a correspondence between the first quantity of beam indexes and the one or more time domain information, according to a rule that the time indexes correspond to the time domain information in a one-to-many manner and a rule that the beam indexes correspond to the time indexes in a many-to-one manner.

18. The method according to claim 16, further comprising:

determining that a reference time domain location of the time domain offset of the time domain information corresponding to each time index is a first reference time domain location; or
determining that a reference time domain location of the time domain offset of the time domain information corresponding to the time index is a time domain location indicated by a time domain offset of a previous time domain information.

19. The method according to claim 18, wherein the first reference time domain location comprises:

a time domain location where the first dynamic control information is received; or,
a time domain location where an HARQ-ACK is fed back.

20. The method according to claim 16, wherein in a case that the time domain start location and the time domain length of the time domain information are jointly encoded, the method further comprises:

determining a start and length indication value (SLIV) comprised in the time domain information according to a first formula, the time domain start location and the time domain length, wherein the first formula is: $SLIV = W \cdot (L - 1) + S$, or $SLIV = W \cdot (W - L + 1) + (W - 1 - S)$,
wherein $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

21. A forwarding node, comprising: a memory, a transceiver and a processor, wherein the memory is configured to store a computer program; the transceiver is configured to receive and transmit data under the control of the processor; and the processor is configured to read the computer program from the memory to perform the following steps:

receiving one or more first parameters of beam indication information configured by a base station;
receiving a first dynamic control information transmitted by the base station; and
determining one or more time domain locations indicated by the first dynamic control information and beam information corresponding to the one or more time domain locations according to the one or more first parameters and the first dynamic control information.

22. The forwarding node according to claim 21, wherein the one or more first parameters comprise one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, comprising one or more of a time domain offset, a time domain start location, or a time domain length.

23. The forwarding node according to claim 22, wherein the first dynamic control information comprises:

a first quantity of beam indexes, the first quantity being equal to the first numerical value; and
one or more time indexes.

24. The forwarding node according to claim 23, wherein

the time domain information is configured in a time domain list, wherein the time domain list comprises a plurality of time indexes and one piece of time domain information corresponding to each time index in the plurality of time indexes; or
the time domain information is configured in a time domain combination list, wherein the time domain combination list comprises a plurality of time indexes and multiple pieces of time domain information corresponding to each time index in the plurality of time indexes.

25. The forwarding node according to claim 24, wherein the processor is further configured to read the computer program from the memory to perform the following steps:

determining the first quantity of beam indexes and the one or more time indexes according to the one or more first parameters and the first dynamic control information;
determining the one or more time domain locations indicated by the first dynamic control information according to time domain information corresponding to the one or more time indexes;

determining a correspondence between the first quantity of beam indexes and one or more time domain information corresponding to the one or more time indexes according to a preset rule, wherein the beam indexes correspond to the time domain information in a one-to-one manner; and

determining the beam information corresponding to the one or more time domain locations according to the correspondence.

26. The forwarding node according to claim 25, wherein the processor is further configured to read the computer program from the memory to perform the following steps:

ignoring indication of the first dynamic control information, in a case that a beam index comprised in the first dynamic control information is a third numerical value, and/or a time index comprised in the first dynamic control information is a fourth numerical value.

27. The forwarding node according to claim 26, wherein the third numerical value is greater than the second numerical value, or the third numerical value is a preset value;

the fourth numerical value is a preset value, or the fourth numerical value is greater than a maximum time index configured by the base station.

28. The forwarding node according to claim 25, wherein the processor is further configured to read the computer program from the memory to perform the following steps:

in a case that the time domain information is configured in the time domain list, determining the correspondence between the first quantity of beam indexes and the one or more time domain information, according to a rule that the time indexes correspond to the time domain information in a one-to-one manner and a rule that the beam indexes correspond to the time indexes in a one-to-one manner; or

in a case that the time domain information is configured in the time domain combination list, determining the correspondence between the first quantity of beam indexes and the one or more time domain information, according to a rule that the time indexes correspond to the time domain information in a one-to-many manner and a rule that the beam indexes correspond to the time indexes in a many-to-one manner.

29. The forwarding node according to claim 25, wherein the processor is further configured to read the computer program from the memory to perform the following steps:

determining that a reference time domain location of the time domain offset of the time domain information corresponding to each time index is a first reference time domain location; or

determining that a reference time domain location of the time domain offset of the time domain information corresponding to the time index is a time domain location indicated by a time domain offset of a previous time domain information.

30. The forwarding node according to claim 29, wherein the first reference time domain location comprises:

a time domain location where the first dynamic control information is received; or

a time domain location where a hybrid automatic repeat request acknowledgment (HARQ-ACK) is fed back.

31. The forwarding node according to claim 25, wherein in a case that the time domain start location and the time domain length of the time domain information are indicated independently of each other, a minimum value of the time domain length is 1, and a maximum value of the time domain length is one of 14, 28, or 42; or

in a case that the time domain start location and the time domain length of the time domain information are indicated independently of each other, a minimum value of the time domain length is 1, and a maximum value of the time domain length is one of 12, 24, or 36.

32. The forwarding node according to claim 25, wherein in a case that the time domain start location and the time domain length of the time domain information are jointly encoded, the processor is further configured to read the computer program from the memory to perform the following step:

determining the time domain start location and the time domain length comprised in the time domain information according to a start and length indication value (SLIV) comprised in the time domain information and a first formula, wherein the first formula is: $SLIV = W \cdot (L - 1) + S$, or $SLIV = W \cdot (W - L + 1) + (W - 1 - S)$,

wherein $0 < L \le W - S$, L denotes the time domain length; S denotes the time domain start location, and S is an integer greater than or equal to 0, and less than or equal to 13; W = N * 14 or W = N * 12, and N is an integer greater than or equal to 1.

33. An apparatus for determining beam information, comprising:

a first receiving unit, configured to receive one or more first parameters of beam indication information configured by a base station;
a second receiving unit, configured to receive a first dynamic control information transmitted by the base station; and
a determining unit, configured to determine one or more time domain locations indicated by the first dynamic control information and beam information corresponding to the one or more time domain locations according to the one or more first parameters and the first dynamic control information.

34. The apparatus according to claim 33, wherein the one or more first parameters comprise one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, comprising one or more of a time domain offset, a time domain start location, or a time domain length.

35. The apparatus according to claim 34, wherein the first dynamic control information comprises:

a first quantity of beam indexes, the first quantity being equal to the first numerical value; and
one or more time indexes.

36. The apparatus according to claim 35, wherein

the time domain information is configured in a time domain list, wherein the time domain list comprises a plurality of time indexes and one piece of time domain information corresponding to each time index in the plurality of time indexes; or
the time domain information is configured in a time domain combination list, wherein the time domain combination list comprises a plurality of time indexes and multiple pieces of time domain information corresponding to each time index in the plurality of time indexes.

37. The apparatus according to claim 36, wherein the determining unit is further configured to:

determine the first quantity of beam indexes and the one or more time indexes according to the one or more first parameters and the first dynamic control information;
determine the one or more time domain locations indicated by the first dynamic control information according to time domain information corresponding to the one or more time indexes;
determine a correspondence between the first quantity of beam indexes and one or more time domain information corresponding to the one or more time indexes according to a preset rule, wherein the beam indexes correspond to the time domain information in a one-to-one manner; and
determine the beam information corresponding to the one or more time domain locations according to the correspondence.

38. The apparatus according to claim 37, further comprising:
an ignoring unit, configured to ignore indication of the first dynamic control information, in a case that a beam index comprised in the first dynamic control information is a third numerical value, and/or a time index comprised in the first dynamic control information is a fourth numerical value.

39. The apparatus according to claim 38, wherein the third numerical value is greater than the second numerical value, or the third numerical value is a preset value;
the fourth numerical value is a preset value, or the fourth numerical value is greater than a maximum time index configured by the base station.

40. The apparatus according to claim 37, wherein the determining unit is further configured to:

in a case that the time domain information is configured in the time domain list, determine the correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, determine the correspondence between the first quantity of beam indexes and the one or more time domain information, according to a rule that the time indexes correspond to the time domain information in a one-to-many manner and a rule that the beam indexes correspond to the time indexes in a many-to-one manner.

41. The apparatus according to claim 37, further comprising: a first reference time domain determining unit, configured to:

determine that a reference time domain location of the time domain offset of the time domain information corresponding to each time index is a first reference time domain location; or
determine that a reference time domain location of the time domain offset of the time domain information corresponding to the time index is a time domain location indicated by a time domain offset of a previous time domain information.

42. The apparatus according to claim 41, wherein the first reference time domain location comprises:

a time domain location where the first dynamic control information is received; or
a time domain location where a hybrid automatic repeat request acknowledgment (HARQ-ACK) is fed back.

43. The apparatus according to claim 37, wherein in a case that the time domain start location and the time domain length of the time domain information are indicated independently of each other, a minimum value of the time domain length is 1, and a maximum value of the time domain length is one of 14, 28, or 42; or
in a case that the time domain start location and the time domain length of the time domain information are indicated independently of each other, a minimum value of the time domain length is 1, and a maximum value of the time domain length is one of 12, 24, or 36.

44. The apparatus according to claim 37, wherein in a case that the time domain start location and the time domain length of the time domain information are jointly encoded, the apparatus further comprises:

a first time domain determining unit, configured to determine the time domain start location and the time domain length comprised in the time domain information according to a start and length indication value (SLIV) comprised in the time domain information and a first formula, wherein the first formula is: $SLIV = W \cdot (L - 1) + S$, or $SLIV = W \cdot (W - L + 1) + (W - 1 - S)$,
wherein $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

45. A base station, comprising: a memory, a transceiver and a processor, wherein the memory is configured to store a computer program; the transceiver is configured to receive and transmit data under the control of the processor; and the processor is configured to read the computer program from the memory to perform the following steps:

configuring one or more first parameters of beam indication information for a forwarding node; and
transmitting a first dynamic control information to the forwarding node,
wherein the one or more first parameters and the first dynamic control information are used for determining one or more time domain locations indicated by the first dynamic control information and beam information corresponding to the one or more time domain locations.

46. The base station according to claim 45, wherein the one or more first parameters comprise one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, comprising one or more of a time domain offset, a time domain start location, or a time domain length.

47. The base station according to claim 46, wherein the first dynamic control information comprises:

a first quantity of beam indexes, the first quantity being equal to the first numerical value; and
one or more time indexes.

48. The base station according to claim 47, wherein

the time domain information is configured in a time domain list, wherein the time domain list comprises a plurality of time indexes and one piece of time domain information corresponding to each time index in the plurality of time indexes; or
the time domain information is configured in a time domain combination list, wherein the time domain combination list comprises a plurality of time indexes and multiple pieces of time domain information corresponding to each time index in the plurality of time indexes.

49. The base station according to claim 48, wherein the processor is further configured to read the computer program from the memory to perform the following steps:

in a case that the time domain information is configured in the time domain list, configuring a correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, configuring a correspondence between the first quantity of beam indexes and the one or more time domain information, according to a rule that the time indexes correspond to the time domain information in a one-to-many manner and a rule that the beam indexes correspond to the time indexes in a many-to-one manner.

50. The base station according to claim 48, wherein the processor is further configured to read the computer program from the memory to perform the following steps:

determining that a reference time domain location of the time domain offset of the time domain information corresponding to each time index is a first reference time domain location; or
determining that a reference time domain location of the time domain offset of the time domain information corresponding to the time index is a time domain location indicated by a time domain offset of a previous time domain information.

51. The base station according to claim 50, wherein the first reference time domain location comprises:

a time domain location where the first dynamic control information is received; or,
a time domain location where an HARQ-ACK is fed back.

52. The base station according to claim 48, wherein in a case that the time domain start location and the time domain length of the time domain information are jointly encoded, the processor is further configured to read the computer program from the memory to perform the following steps:

determining a start and length indication value (SLIV) comprised in the time domain information according to a first formula, the time domain start location and the time domain length,
wherein the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

53. An apparatus for indicating beam information, comprising:

a configuring unit, configured to configure one or more first parameters of beam indication information for a forwarding node; and

a transmitting unit, configured to transmit a first dynamic control information to the forwarding node, wherein the one or more first parameters and the first dynamic control information are used for determining one or more time domain locations indicated by the first dynamic control information and beam information corresponding to the one or more time domain locations.

54. The apparatus according to claim 53, wherein the one or more first parameters comprise one or more of the following:

a first numerical value, used for determining a maximum quantity of beams that one first dynamic control information is capable of indicating;
a second numerical value, used for determining a maximum beam index or a quantity of bits used for the maximum beam index that one first dynamic control information is capable of indicating; or
time domain information, comprising one or more of a time domain offset, a time domain start location, or a time domain length.

55. The apparatus according to claim 54, wherein the first dynamic control information comprises:

a first quantity of beam indexes, the first quantity being equal to the first numerical value; and
one or more time indexes.

56. The apparatus according to claim 55, wherein

the time domain information is configured in a time domain list, wherein the time domain list comprises a plurality of time indexes and one piece of time domain information corresponding to each time index in the plurality of time indexes; or
the time domain information is configured in a time domain combination list, wherein the time domain combination list comprises a plurality of time indexes and multiple pieces of time domain information corresponding to each time index in the plurality of time indexes.

57. The apparatus according to claim 56, further comprising: a correspondence configuring unit configured to:

in a case that the time domain information is configured in the time domain list, configure a correspondence between the first quantity of beam indexes and the one or more time domain information, according to a rule that the time indexes correspond to the time domain information in a one-to-one manner and a rule that the beam indexes correspond to the time indexes in a one-to-one manner; or
in a case that the time domain information is configured in the time domain combination list, configure a correspondence between the first quantity of beam indexes and the one or more time domain information, according to a rule that the time indexes correspond to the time domain information in a one-to-many manner and a rule that the beam indexes correspond to the time indexes in a many-to-one manner.

58. The apparatus according to claim 56, further comprising: a second reference time domain determining unit configured to:

determine that a reference time domain location of the time domain offset of the time domain information corresponding to each time index is a first reference time domain location; or
determine that a reference time domain location of the time domain offset of the time domain information corresponding to the time index is a time domain location indicated by a time domain offset of a previous time domain information.

59. The apparatus according to claim 58, wherein the first reference time domain location comprises:

a time domain location where the first dynamic control information is received; or,
a time domain location where an HARQ-ACK is fed back.

60. The apparatus according to claim 56, wherein in a case that the time domain start location and the time domain length of the time domain information are jointly encoded, the apparatus further comprises: a second time domain determining unit, configured to:

determine a start and length indication value (SLIV) comprised in the time domain information according to a first formula, the time domain start location and the time domain length,

wherein the first formula is: $SLIV = W \cdot (L - 1) + S$, or $SLIV = W \cdot (W - L + 1) + (W - 1 - S)$, where $0 < L \leq W - S$, L denotes the time domain length; S denotes the time domain start location, and S is an integer greater than or equal to 0, and less than or equal to 13; $W = N * 14$ or $W = N * 12$, and N is an integer greater than or equal to 1.

61. A processor-readable storage medium, wherein the processor-readable storage medium stores a computer program, and the computer program is configured to cause a processor to perform the method according to any one of claims 1 to 12, or the computer program is configured to cause a processor to perform the method according to any one of claims 13 to 20.

FIG. 1

receiving, by a forwarding node, one or more first parameters of beam indication information configured by a base station ⟋ 201

receiving, by the forwarding node, a first dynamic control information transmitted by the base station ⟋ 202

determining, by the forwarding node, one or more time-domain positions indicated by the first dynamic control information and beam information corresponding to the one or more time-domain positions according to the one or more first parameters and the first dynamic control information ⟋ 203

FIG. 2

configuring, by a base station, one or more first parameters of beam indication information for a forwarding node ⟋ 301

transmitting, by the base station, a first dynamic control information to the forwarding node ⟋ 302

FIG. 3

DCI: dynamic beam indication

reference slot n

K0=4

K0=3

K0=2

N1

DCI

SLIV

SLIV

SLIV

n+2

n+3

n+4

Time-index[0]

Time-index[2]

Time-index[1]

FIG. 4

K0=2

K0=1

K0=2

K0=0

SLIV

SLIV

SLIV

SLIV

reference slot n

slot n+2

slot n+3

slot n+5

Time-index[0]

Time-index[1]

Time-index[2]

Time-index[3]

FIG. 5

600

processor

620

memory

bus interface

610

transceiver

FIG. 6

first receiving unit / 701

second receiving unit / 702

determining unit / 703

FIG. 7

800

processor

memory / 820

bus interface

transceiver / 810

FIG. 8

configuring unit / 901

transmitting unit / 902

FIG. 9

## INTERNATIONAL SEARCH REPORT

| International application No. |
| --- |
| **PCT/CN2023/141887** |

| A. | CLASSIFICATION OF SUBJECT MATTER |
| --- | --- |
| | H04W 72/044(2023.01)i |

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; 3GPP; IEEE; CNKI: 中继, 转发, 中间, 设备, 节点, 波束, 配置, 信令, 索引, 时间, 时域, 偏移, NCR, relay, beam, configuration, RRC, PDCCH, DCI, RNTI, index, time, offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022174509 A1 (ELECTRONICS AND TELECOMMUNICATIONS RESEARCH INSTITUTE) 02 June 2022 (2022-06-02) description, paragraphs [0214]-[0399] | 1-11, 13-19, 21-31, 33-43, 45-51, 53-59, 61 |
| A | US 2022311503 A1 (QUALCOMM INC.) 29 September 2022 (2022-09-29) entire document | 1-61 |
| A | WO 2022017334 A1 (VIVO MOBILE COMMUNICATION CO., LTD.) 27 January 2022 (2022-01-27) entire document | 1-61 |
| A | WO 2022082774 A1 (HUAWEI TECHNOLOGIES CO., LTD.) 28 April 2022 (2022-04-28) entire document | 1-61 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2024** | **28 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/141887**

| Patent document cited in search report | | | Publication date (day/month/year) | Patent family member(s) | | | Publication date (day/month/year) |
|---|---|---|---|---|---|---|---|
| US | 2022174509 | A1 | 02 June 2022 | None | | | |
| US | 2022311503 | A1 | 29 September 2022 | US | 11569900 | B2 | 31 January 2023 |
| WO | 2022017334 | A1 | 27 January 2022 | None | | | |
| WO | 2022082774 | A1 | 28 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310146327